# EUROPÄISCHE PATENTSCHRIFT

(11) **EP 1 641 587 B1**
(45) Veröffentlichungstag und Bekanntmachung des Hinweises auf die Patenterteilung: **16.11.2011**
(21) Anmeldenummer: 04740345.6
(22) Anmeldetag: 25.06.2004
(51) Int. Cl.: B23K 11/25

(54) **VERFAHREN UND VORRICHTUNG ZUR GEWINNUNG VON INFORMATIONEN ZUR BEURTEILUNG DER QUALITÄT EINER WIDERSTANDSSCHWEISSVERBINDUNG UND/ODER ZUR STEUERUNG ODER REGELUNG EINES WIDERSTANDSSCHWEISSVERFAHRENS**
METHOD AND DEVICE FOR OBTAINING INFORMATION FOR EVALUATING A RESISTANCE WELDING QUALITY AND/OR FOR CONTROLLING OR ADJUSTING A RESISTANCE WELDING METHOD
PROCEDE ET DISPOSITIF PERMETTANT D'OBTENIR DES INFORMATIONS POUR EVALUER LA QUALITE D'UNE SOUDURE PAR RESISTANCE ET / OU POUR COMMANDER OU REGULER UN PROCEDE DE SOUDAGE PAR RESISTANCE

(30) Priorität: 26.06.2003 DE 10328635
(43) Veröffentlichungstag der Anmeldung: 05.04.2006
(73) Patentinhaber: Karakas, Erdogan, 30938 Burgwedel (DE)
(72) Erfinder: Karakas, Erdogan, 30938 Burgwedel (DE)
(74) Vertreter: Wagner, Carsten
(86) Internationale Anmeldenummer: PCT/EP2004/006939
(87) Internationale Veröffentlichungsnummer: WO 2004/113010

(56) Entgegenhaltungen:
- EP-A- 0 835 713
- DE-A- 4 328 363
- FR-A- 2 694 899
- US-A- 5 229 568
- PATENT ABSTRACTS OF JAPAN Bd. 1999, Nr. 08, 30. Juni 1999 (1999-06-30) & JP 11 077323 A (FURUKAWA ELECTRIC CO LTD:THE), 23. März 1999 (1999-03-23)

## Beschreibung

Die Erfindung betrifft ein Verfahren der im Oberbegriff des Anspruchs 1 genannten Art und eine Vorrichtung der im Oberbegriff des Anspruchs 17 genannten Art zur Gewinnung von Informationen zur Beurteilung der Qualität einer Widerstandsschweißverbindung und/oder zur Steuerung oder Regelung eines WiderstandsschweißVerfahrens.

Ein solches Verfahren und eine solche Vorrichtung sind durch JP 11 077 303 bekannt.

Es sind verschiedene Verfahren zur Gewinnung von Informationen zur Beurteilung der Qualität einer Widerstandsschweißverbindung und/oder zur Steuerung oder Regelung eines Widerstandsschweißverfahrens bekannt. Beispielsweise ist durch WO 03/028936 A2 eine Einrichtung zur Gewinnung von Informationen zur Steuerung eines Widerstandsschweißverfahrens bekannt, bei der Meßmittel zur Erfassung der Temperatur der Schweißelektroden und/oder des Werkstücks vorgesehen sind. Mit der bekannten Einrichtung wird während des Schweißverganges die Temperatur der Schweißelektroden und/oder des Werkstücks erfaßt, um über die Temperatur Rückschlüsse auf den Fortgang des Schweißvorganges ziehen zu können. Ergibt die Messung der Temperatur der Schweißelektrode beispielsweise, daß sich eine der Schweißelektroden stärker erwärmt hat als die andere, so kann daraus der Schluß gezogen werden, daß eine Schweißlinse, die sich an einer Kontaktfläche zwischen den zu verschweißenden Werkstücken bildet, sich in Richtung auf die stärker erwärmte Schweißelektrode verschiebt, was unter Umständen unerwünscht sein kann. Um eine solche Verschiebung zu verhindern und somit eine zu der Kontaktebene zwischen den zu verschweißenden Werkstücken symmetrische Anordnung der schweißlinse zu erzielen, können in Abhängigkeit von den gemessenen Temperaturen Parameter des Schweißvorganges gesteuert oder geregelt werden. Die bekannte Einrichtung liefert äußerst genaue Informationen über die Temperatur der Schweißelektroden, wobei allerdings ein verhältnismäßig hoher apparativer Aufwand erforderlich ist.

Ähnliche Einrichtungen sind auch durch Patent Abstracts of Japan, vor. 004, no. 154 (M-038), 28.10.1980 & JP 55106693 A, US 4,214,164 A, EP 0 252 624 A, Patent Abstracts of Japan, vol. 005, no. 172 (M-095), 31.10.1981 & JP 56099082 A, WO 00/59673 A, DE 34 16 733 C, CH 411 166 A und US 5,093,553 A bekannt.

Verfahren zur Gewinnung von Informationen zur Beurteilung der Qualität einer Widerstandsschweißverbindung sind ferner durch DE 43 28 363 C2, DE 43 28 337 Cl und WO 92/10326 bekannt.

Ferner ist durch DE 43 38 449 C2 ein Verfahren zur Gewinnung von Informationen zur Beurteilung der Qualität einer Widerstandsschweißverbindung bekannt, bei dem nach Beendigung des Schweißvorganges eine thermoelektrische Spannung zwischen einer der Schweißelektroden und dem von ihr berührten Werkstück gemessen wird. Ein Nachteil des bekannten Verfahrens besteht darin, daß es zur Steuerung eines Widerstandsschweißverfahrens während des Schweißvorganges nicht geeignet ist.

Verfahren und Vorrichtungen zum Widerstandsschweißen sind ferner durch US-A-5 229 568, FR-A-26 94 899, EP-A-0 835 713, DE-A-43 28 363 und Patent Abstracts of Japan, Vol. 1999, Nr. 08, 30.06.1999, JP 11 077 323 bekannt.

Der Erfindung liegt die Aufgabe zugrunde, ein Verfahren der im Oberbegriff des Anspruchs genannten Art und eine Vorrichtung der im Oberbegriff des Anspruchs 17 genannten Art anzugeben, das bzw. die sowohl zur Gewinnung von Informationen zur Beurteilung der Qualität einer Widerstandsschweißverbindung nach Abschluß des Schweißvorganges als auch zur Steuerung oder Regelung eines Widerstandsschweißverfahrens während des Schweißvorganges geeignet ist und das bzw. die zuverlässige Informationen liefert.

Diese Aufgabe wird hinsichtlich des Verfahrens durch die im Anspruch 1 angegebene Erfindung und hinsichtlich der Vorrichtung durch die im Anspruch 17 angegebene Erfindung gelöst.

Erfindungsgemäß werden während des Schweißvorganges als erste Spannung die Spannung zwischen einer ersten Schweißelektrode und einem ersten der zu verschweißenden Werkstücke und als zweite Spannung die Spannung zwischen der zweiten Schweißelektrode und einem zweiten der zu verschweißenden Werkstücke gemessen.

Die Erfindung löst sich von der verbreiteten Auffassung, die während des Schweißvorganges dissipierte elektrische Gesamtleistung aus dem Produkt des während des Schweißvorganges fließenden Schweißstromes mit der an die Schweißelektroden angelegten Spannung zu permitteln. Die Erfindung basiert vielmehr auf einer differenzierten Betrachtungsweise, nach der sich die Gesamtleistung vor allem aus den folgenden drei Leistungskomponenten zusammensetzt:
1. an der Kontaktfläche zwischen der positiv gepolten Schweißelektrode und einem der Werkstücke dissipierte Leistung
2. an der Kontaktfläche zwischen den zu verschweißenden Werkstücken dissipierte Leistung
3. an der Kontaktfläche zwischen der negativ gepolten Elektrode und dem anderen Werkstück dissipierte Leistung.

Die Erfindung basiert weiter auf dem Gedanken, daß die oben genannte Leistungekomponente gemäß 2. zu der Bildung einer Schweißlinie an der Kontaktfläche zwischen den zu verschweißenden Werkstücken führt, während die oben genannte Leistungskomponente gemäß 1. zur Erwärmung der positiv gepolten Schweißelektrode und die oben genannte Leistungskomponente gemäß 2. zur Brwärmung der negativ gepolten Schweißelektrode führt. Weiterhin liegt der Erfindung der Gedanke zugrunde, daß die oben genannte Leistungskomponente gemäß 1. durch den Übergangswiderstand zwischen der positiv gepolten Schweißelektrode und dem von ihr berührten Werkstück und die oben genannte Leistungskomponente gemäß 3. durch den Übergangswiderstand zwischen der negativ gepolten Schweißelektrode und dem von ihr berührten Werkstück dissipiert wird.

Da beide Schweißelektroden und die zu verschweißenden Werkstücke während des Schweißvorganges von demselben Schweißstrom durchflossen sind, macht sich die Erfindung ausgehend von den obigen Gedanken zunutze, daß eine Abweichung der Leistungekomponenten gemäß 1. und 3. voreinander bedeutet, daß eine erste Spannung zwischen einer ersten Schweißelektrode und einem ersten der zu verschweißenden Werkstücke von einer zweiten Spannung zwischen der zweiten Schweißelektrode und einem zweiten der zu verschweißenden Werkstücke abweicht.

Hiervon ausgehend ist es durch Messung der ersten Spannung und der zweiten Spannung und Vergleich der beiden Spannungen miteinander möglich, eine Information darüber zu erhalten, ob die obigen Leietungskomponenten gemäß 1. und 3. gleich sind oder voneinander abweichen. Ergibt beispielsweise eine Messung der ersten Spannung und der zweiten Spannung, daß beide Spannungen gleich sind, so bedeutet dies, daß die obige Leistungskomponente gemäß 1. im wesentlichen der obigen Leistungskomponente gemäß 3. entspricht, die zwischen der positiven Schweißelektrode und dem von ihr berührten Werkstück dissipierte Leistung also im wesentlichen gleich der zwischen der negativ gepolten Schweißelektrode und dem von ihr berührten Werkstück ist. Daraus ergibt sich, daß beide Schweißelektroden etwa in gleichem Maße erwärmt sind, was während des Schweißvorganges zu einer Bildung einer zu der Kontaktfläche zwischen den zu verschweißenden Werkstücken im wesentlichen symmetrischen Schweißlinse führt.

Ergibt demgegenüber eine Messung der ersten Spannung und der zweiten Spannung, daß die erste Spannung größer ist als die zweite Spannung, so bedeutet dies, daß die obige Leistungskomponente gemäß 1. größer ist als die obige Leistungskomponente gemäß 3., die zwischen der positiv gepolten Schweißelektrode und dem von ihr berührten Werkstück dissipierte Leistung also höher ist als die zwischen der negativ gepolten Schweißelektrode und dem von ihr berührten Werkstück dissipierte Leistung und daher die positiv gepolte Schweißelektrode stärker erwärmt ist und sich die Schweißlinse somit aus einer zu der Kontaktfläche zwischen den zu verschweißenden Werkstücken symmetrischen Lage in Richtung auf die positiv gepolte Schweißelektrode verschiebt. Falls eine solche Verschiebung unerwünscht, kann beispielsweise bei Verwendung einer umpolbaren Gleichspannung an den Schweißelektroden diese Spannung umgepolt werden, was dazu führt, daß sich anschließend die zunächst negativ gepolte und nach der Umpolung positiv gepolte Schweißelektrode stärker erwärmt.

Auf diese Weise kann beispielsweise die Bildung einer zu der Kontaktfläche zwischen den zu verschweißenden Werkstücken asymmetrischen Schweißlinse vermieden werden. Es ist jedoch auch möglich, mittels des erfindungsgemäßen Verfahrens zu vermeidet, daß sich aufgrund einer unterschiedlichen Abnutzung der Schweißelektroden nachteilige Auswirkungen auf den Schweißvorgang, beispielsweise durch Bildung einer zu der Kontaktfläche zwischen den zu verschweißenden Werkstücken asymmetrischen Schweißlinse, zu verhindern.

Ein besonderer Vorteil des erfindungsgemäßen verfahrens besteht darin, daß es mit besonders geringem apparativen Aufwand durchführbar ist.

Eine Weiterbildung der vorgenannten Ausführungsform sieht vor, daß wenigstens ein Parameter, insbesondere die Amplitude, der Effektivwert oder der zeitliche Mittelwert der gemessenen ersten Spannung zu einem entsprechenden Parameter der gemessenen zweiten Spannung in Beziehung gesetzt wird. Die Spannungen können beispielsweise dadurch zueinander in Beziehung gesetzt werden, daß die gemessenen Amplituden voneinander subtrahiert werden, um beispielsweise eine Differenz zwischen den Amplituden der Spannungen zu ermitteln, die eine Differenz zwischen der obigen Leistungskomponente gemäß 1. und der obigen Leistungskomponente gemäß 3. anzeigt.

Eine andere Weiterbildung des erfindungsgemäßen Verfahrens sieht vor, daß die Amplitude der ersten Spannung mit der Amplitude der zweiten Spannung verglichen wird.

Bei den vorgenannten Ausführungsformen kann ein Auswertungsergebnis, beispielsweise eine Differenz zwischen der ersten Spannung und der zweiten Spannung oder ein Ergebnis eines Vergleiches der ersten Spannung mit der zweiten Spannung herangezogen werden, um den Schweißvorgang so zu beeinflussen, daß die erste Spannung und die zweite Spannung jeweils vorgegebene oder gewünschte Werte annehmen.

Eine andere Weiterbildung des erfindungsgemäßen Verfahrens sieht vor, daß wenigstens eine der gemessenen Spannungen mit einem vorgegebenen und vorgebbaren Sollwert verglichen wird. Der Sollwertvergleich kann hierbei für die erste Spannung und die zweite Spannung getrennt voneinander erfolgen. Es ist jedoch auch möglich, beispielsweise eine Differenz der beiden Spannungen mit einer Soll-Differenz zu vergleichen.

Eine andere Weiterbildung des erfindungsgemäßen Verfahrens sieht vor, daß die erste Spannung und/oder die zweite Spannung während des Schweißvorganges zu einem oder mehreren vorbestimmten und/oder während des Schweißvorganges gewählten Zeitpunkten oder wenigstens zeitweise kontinuierlich gemessen werden bzw. wird. Entsprechend den jeweiligen Anforderungen kann also eine ein- oder mehrmalige Messung der ersten und/oder zweiten Spannung zu vorbestimmten Zeitpunkten durchgeführt werden. Es ist jedoch auch möglich, die Messung der ersten Spannung und/oder der zweiten Spannung während des gesamten Schweißvorganges oder nur zeitweise während des Schweißvorganges kontinuierlich durchzuführen. Eine kontinuierliche Messung ist insbesondere dann bevorzugt, wenn mit einer schnellen zeitlichen Veränderung der Amplituden der Spannungen während des Schweißvorganges zu rechnen ist.

Eine außerordentlich vorteilhafte Weiterbildung der erfindungsgemäßen Lehre sieht vor, daß wenigstens ein Parameter des Schweißvorganges in Abhängigkeit von der gemessenen Spannung bzw. den gemessenen Spannungen gesteuert oder geregelt wird. Diese Ausführungsform ermöglicht eine Online-Beeinflussung des Schweißvorganges in weiten Grenzen. Bei dieser Ausführungsform kann beispielsweise der Schweißvorgang so gesteuert oder geregelt werden, daß sich eine beliebige gewünschte Position der Schweißlinie relativ zu der Kontaktfläche zwischen den zu verschweißenden Werkstücken oder eine beliebige gewünschte Größe der Schweißlinse ergibt oder daß sich ein gewünschter Abnutzungsgrad der Schweißelektroden einstellt bzw. ein unterschiedlicher Abnutzungsgrad zwischen den Schweißelektroden ausgeglichen wird.

Eine Weiterbildung der vorgenannten Ausführungsform sieht vor, daß wenigstens eine der gemessenen Spannungen mit einer vorgegebenen oder vorgebbaren Referenzspannung verglichen wird und daß der Parameter oder die Parameter des Schweißvorganges in Abhängigkeit von dem Vergleichsergebnis gesteuert bzw. geregelt werden.

Bei den vorgenannten Ausführungsformen können gemäß einer Weiterbildung die Parameter des Schweißvorganges wenigstens
- die Amplitude des Schweißstromes,
- die Schweißzeit,
- die Kurvenform des Schweißstromes,
- die Pulsform und/oder Pulsfrequenz eines gepulsten Schweißstromes,
- die Spannung an der Sekundärwicklung des verwendeten Schweißtransformators,
- die Polarität der Spannung an den Schweißelektroden und
- eine Kraft, die wenigstens eine der Schweißelektroden auf wenigstens eines der zu verschweißenden Werkstücke ausübt,
umfassen. Die zur Beeinflussung des Schweißvorganges herangezogenen Parameter sind entsprechend den jeweiligen Anforderungen in weiten Grenzen wählbar.

Entsprechend den jeweiligen Anforderungen ist es möglich, wenigstens eine der Spannungen zwischen einer der Schweißelektroden und einer dieser Schweißelektrode zugewandten Fläche des von dieser Schweißelektrode berührten Werkstücks und/oder zwischen einer der Schweißelektroden und einer dieser Schweißelektrode abgewandten Fläche des von dieser Schweißelektrode berührten Werkstücks und/oder zwischen einer der Schweißelektroden und einer dieser Schweißelektrode abgewandten Fläche des von der anderen Schweißelektrode berührten Werkstücks zu messen, wie dies Weiterbildungen des erfindungsgemäßen Verfahrens vorsehen.

Wenn eine Beeinflussung des Schweißvorganges in Abhängigkeit von den Übergangswiderständen zwischen den Schweißelektroden und den jeweils von ihnen berührten Werkstücken erfolgen soll, so ist es zweckmäßig, daß aus wenigstens einer der gemessenen Spannungen ein Übergangswiderstand zwischen der zugeordneten Schweißelektrode und dem von ihr berührten Werkstück ermittelt wird.

Es ist auch möglich, aus wenigstens einer der gemessenen Spannungen eine Leistung zu ermitteln, die durch einen Übergangswiderstand zwischen einer der Schweißelektroden und dem von ihr berührten Werkstück und/oder einem Übergangswiderstand zwischen den zu verschweißenden Werkstücken dissipiert wird, wie dies eine andere Ausführungsform vorsieht.

Eine andere Weiterbildung der erfindungsgemäßen Lehre sieht vor, daß anhand wenigstens einer der gemessenen Spannungen ermittelt wird, ob wenigstens eine der Schweißelektroden das ihr zugeordnete Werkstück berührt. Bei dieser Ausführungsform kann mittels des erfindungsgemäßen Verfahrens beispielsweise ein Startsignal für den Schweißvorgang erzeugt werden, sobald anhand der gemessenen Spannung festgestellt wird, daß die jeweilige Elektrode das ihr zugeordnete Werkstück berührt. Es ist jedoch auch möglich, den Schweißvorgang zu unterbrechen, sobald anhand der gemessenen Spannung festgestellt wird, daß eine der Schweißelektroden das ihr zugeordnete Werkstück nicht mehr berührt.

Erfindungsgemäß ist es möglich, anstelle der ersten Spannung zwischen der ersten Schweißelektrode und einem ersten der zu verschweißenden Werkstücke eine Spannung zu messen, die von der ersten Spannung abhängig, insbesondere zu der ersten Spannung proportional ist.

Ferner ist es möglich, die jeweils gemessene Spannung in einen Strom oder eine andere von der gemessenen Spannung abhängige Größe umzuwandeln und somit anstelle der Spannung diese Größe zu messen und zur Gewinnung von Informationen zur Beurteilung der Qualität der Widerstandsschweißverbindung und/oder zur Steuerung oder Regelung des Widerstandsschweißverfahrens heranzuziehen.

Entsprechendes gilt auch für die Messung der zweiten Spannung sowie ggf. weiterer Spannungen.

Die gemessenen Spannungen können an einer beliebigen geeigneten Stelle der Schweißelektrode bzw. des jeweiligen Werkstücks oder in geeigneter Weise an mit diesen Teilen elektrisch leitend verbundenen Teilen gemessen werden.

Eine erfindungsgemäße Vorrichtung ist im Anspruch 17 angegeben. Vorteilhafte und zweckmäßige Weiterbildungen der erfindunaagemaßen Einrichtung sind in den auf den Anspruch 17 ruckbezogenen Unteransprüchen 18 bis 23 angegeben.

Die Erfindung wird nachfolgend anhand der beigefügten stark schematisierten Zeichnung näher erläutert, die Ausführungebeiopiele einer erfindungsgemäßen Einrichtung zur Durchführung des erfindungsgemäßen Verfahrens darstellt.

Es zeigt:
- Fig. 1: stark schematisiert eine Seitenansicht einer erfindungsgemäßen Einrichtung zur Durchführung des erfindungsgemäßen Verfahrens,
- Fig. 2: in gleicher Darstellung wie Fig. 1 ein zweites Ausführungsbeispiel einer erfindungsgemäßen Einrichtung,
- Fig. 3: in gleicher Darstellung wie Fig. 2 eine Anordnung zur Kalibrierung der Einrichtung gemäß Fig. 2,
- Fig. 4: in gleicher Darstellung wie Fig. 1 ein drittes Ausführungsbeispiel einer erfindungsgemäßen Einrichtung und
- Fig. 5: ein stark schematisiertes Ersatzschaltbild einer Anordnung zur Durchführung eines Widerstandsschweißverfahrens.

In den Figuren der Zeichnung sind gleiche bzw. sich entsprechende Bauteile mit den gleichen Bezugszeichen versehen.

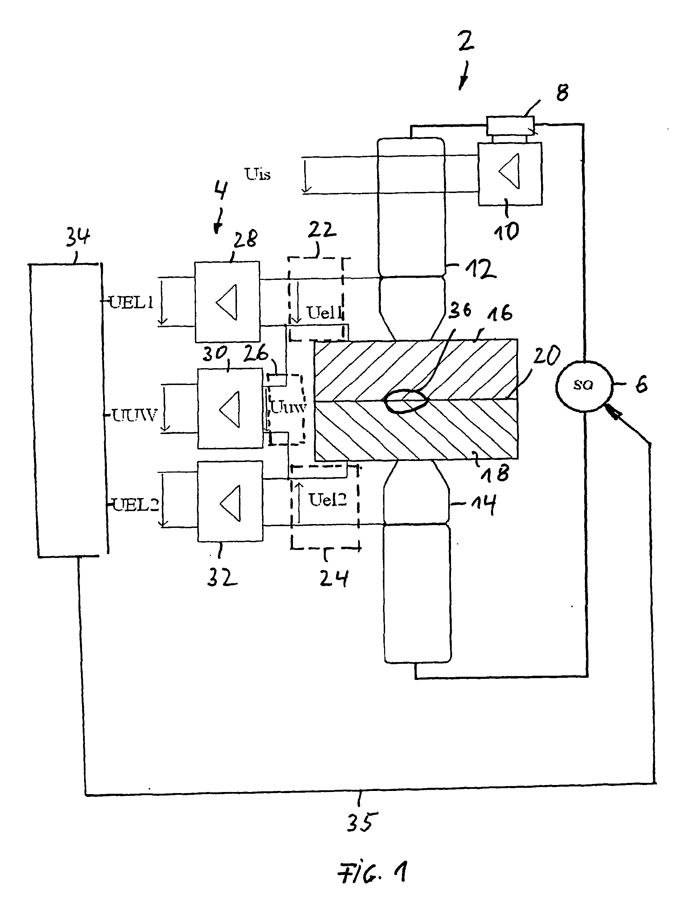

In Fig. 1 sind eine Einrichtung 2 zum Widerstandsschweißen und eine erfindungsgemäße Einrichtung 4 zur Gewinnung von Informationen zur Beurteilung der Qualität einer Widerstandsschweißverbindung und/oder zur Steuerung bzw. Regelung eines Widerstandsschweißverfahrens dargestellt, wobei lediglich die zur Erläuterung des erfindungsgemäßen Verfahrens erforderlichen Bauteile dargestellt sind. Die übrigen Bauteile sind weggelassen.

Die Einrichtung 2 zum Widerstandsschweißen weist eine Stromquelle 6 zur Erzeugung eines Schweißstromes auf, dessen Amplitude durch einen Stromsensor 8 abfühlbar ist. Mit dem Stromsensor 8 ist ein Trennverstärker 10 verbunden, der den von dem Sensor 8 abgeführten Strom in eine Spannung umwandelt. Die Einrichtung 2 weist ferner eine erste Schweißelektrode 12 sowie eine zweite Schweißelektrode 14 auf, die über Zuleitungen mit der Stromquelle 6 verbunden sind. Die Einrichtung 2 dient bei diesem Ausführungsbeispiel zum Bilden einer Widerstandsschweißverbindung zwischen einem ersten Werkstück 16 und einem zweiten Werkstück 18, die entlang einer Kontaktfläche 20 aneinander anliegen und durch die Schweißelektroden 12, 14 gegeneinander gepreßt werden.

Bei Betrieb der Einrichtung 2 erzeugt die Stromquelle 6 einen Schweißstrom, der die erste Schweißelektrode 12, das erste Werkstück 16, das zweite Werkstück 18 und die zweite Schweißelektrode 14 durchfließt, wobei sich an der Kontaktfläche 20 während des Schweißvorganges eine Schweißlinse bildet. Unter einem Schweißvorgang wird erfindungsgemäß die Bildung einer Widerstandsschweißverbindung, d. h. beispielsweise eines Schweißpunktes oder einer Schweißnaht verstanden.

Während des Schweißvorganges liegt an den Schweißelektroden 12, 14 eine Schweißspannung an, die bei diesem Ausführungsbeispiel eine umpolbare Gleichspannung ist. Es ist jedoch auch möglich, an Stelle einer Gleichspannung eine Wechselspannung als Schweißspannung zu verwenden.

Die erfindungsgemäße Einrichtung 4 weist bei diesem Ausführungsbeispiel ein erstes Spannungsmeßgerät 22 zur Messung einer ersten Spannung zwischen der ersten Schweißelektrode 12 und dem ersten Werkstück 16 auf, wobei die erste Spannung unmittelbar an der ersten Schweißelektrode 12 sowie der der ersten Schweißelektrode 12 zugewandten Fläche des ersten Werkstückes 16 abgegriffen wird. Ferner weist die erfindungsgemäße Einrichtung 4 ein zweites Spannungsmeßgerät 24 zur Messung einer zweiten Spannung zwischen der zweiten Schweißelektrode 14 und dem zweiten Werkstück 18 auf, wobei die zweite Spannung unmittelbar an der zweiten Schweißelektrode 14 und an der zweiten Schweißelektrode 14 zugewandten Fläche des zweiten Werkstückes 18 abgegriffen wird.

Zusätzlich ist bei diesem Ausführungsbeispiel ein drittes Spannungsmeßgerät 26 vorgesehen, das die Spannung zwischen dem ersten Werkstück 16 und dem zweiten Werkstück 18 mißt.

Die Ausgangssignale der Spannungsmeßgeräte 22, 24, 26 werden jeweils einem Trennverstärker 28, 30, 32 zugeführt, deren Ausgangssignale einer Auswerte- und Steuerungseinrichtung 34 zugeführt, die über eine Steuerleitung 35 mit der Stromquelle 6 verbunden ist, derart, daß Parameter des Schweißvorganges, bei dem Ausführungsbeispiel die Amplitude des Schweißstromes, die Schweißzeit, die Kurvenform des Schweißstromes, die Polarität der Spannung an den Schweißelektroden und eine Kraft, die die Schweißelektroden 12, 14 jeweils auf das ihnen zugeordnete Werkstück 16 bzw. 18 ausüben, in Abhängigkeit von den von den Spannungsmeßgeräten 22, 24, 26 gemessenen Spannungen steuer- oder regelbar ist.

Das erfindungsgemäße Verfahren wird mittels der erfindungsgemäßen Einrichtung 4 wie folgt durchgeführt:
Während des Schweißvorganges, also der Bildung eines Schweißpunktes oder einer Schweißnaht, fließt ein Schweißstrom von der Schweißquelle 6 zu den Schweißelektroden 12, 14, wobei zunächst die erste Scheißelektrode 12 positiv gepolt ist. Aufgrund des Schweißstromes bildet sich an der Kontaktfläche 20 zwischen den Werkstücken 16, 18 eine in Fig. 1 mit dem Bezugszeichen 36 versehene Schweißlinse. Während des Schweißvorganges besteht die dissipierte elektrische Gesamtleistung im wesentlichen aus den folgenden drei Leistungskomponenten:
   - 1.: zwischen der ersten Schweißelektrode 12 und dem ersten Werkstück 16 aufgrund des zwischen der Schweißelektrode 12 und dem Werkstück 16 bestehenden Übergangswiderstandes dissipierte elektrische Leistung,
   - 2.: an der Kontaktfläche 20 zwischen den Werkstücken 16, 18 dissipierte elektrische Leistung und
   - 3.: zwischen der zweiten Schweißelektrode 14 und dem zweiten Werkstück 18 aufgrund der zwischen der Schweißelektrode 14 und dem Werk-
   stück 18 herrschenden Übergangswiderstandes dissipierte elektrische Leistung.

Da während des Schweißvorganges jeweils derselbe Strom durch die Schweißelektroden 12, 14 und die Werkstücke 16, 18 fließt, ist die von dem ersten Spannungsmeßgerät 22 gemessene Spannung zu der obigen Leistungskomponente gemäß 1. und die von dem zweiten Spannungsmeßgerät 24 gemessene Spannung zu der obigen Leistungskomponente gemäß 3. proportional.

Während des Schweißvorganges werden die erste Spannung durch das erste Spannungsmeßgerät 22 und die zweite Spannung durch das zweite Spannungsmeßgerät 24 bei diesem Ausführungsbeispiel zeitlich kontinuierlich gemessen. Ergibt die Messung der Spannungen, daß die Amplitude der ersten Spannung im wesentlichen gleich der Amplitude der zweiten Spannung ist, so folgt daraus, daß die obige Leistungskomponente gemäß 1. im wesentlichen gleich der obigen Leistungskomponente gemäß 3. ist, so daß sich beide Schweißelektroden 12, 14 im wesentlichen gleich stark erwärmen und sich die Schweißlinse 36 relativ zu der Kontaktfläche 20 im wesentlichen symmetrisch bildet.

Ergibt dem gegenüber eine Messung der Spannungen, daß die erste Spannung größer ist als die zweite Spannung, so ergibt sich daraus, daß die obige Leistungskomponente gemäß 1. größer ist als die obige Leistungskomponente gemäß 3, so daß sich die positiv gepolte Schweißelektrode 12 stärker erwärmt, was zu einer Verschiebung der Position der Schweißlinse 36 relativ zu der Kontaktfläche 20 hin zu der positiv gepolten Elektrode 12 führt. Falls eine solche Verschiebung unerwünscht ist, so steuert die Auswerte- und Steuereinrichtung die Stromquelle 6 derart an, daß die an den Schweißelektroden 12, 14 anliegende Spannung umgepolt wird. Auf diese Weise ist zuverlässig vermeidbar, daß eine ungleichmäßige Erwärmung der Schweißelektroden 12, 14 zu einer unerwünschten Verschiebung der Schweißlinse 36 führt.

Erfindungsgemäß ist es jedoch auch möglich, die Position und/oder Größe der Schweißlinse 36 entsprechend den jeweiligen Anforderungen mittels des erfindungsgemäßen Verfahrens gezielt zu steuern.

Das erfindungsgemäße Verfahren ermöglicht mit einem besonders geringen apparativen Aufwand eine Gewinnung zuverlässiger Informationen zur Beurteilung der Qualität einer Widerstandsschweißverbindung und/oder zur Steuerung oder Regelung eines Widerstandsschweißverfahrens. Es ist insbesondere zur Online-Steuerung bzw. -regelung eines Widerstandsschweißverfahrens geeignet.

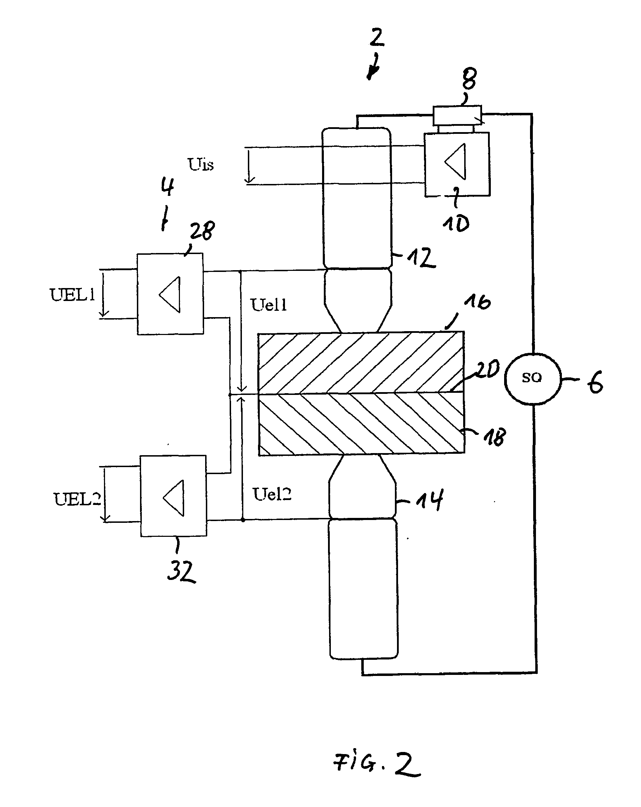

In Fig. 2 ist ein zweites Ausführungsbeispiel einer erfindungsgemäßen Einrichtung 4 dargestellt, das sich von dem Ausführungsbeispiel gemäß Fig. 1 dadurch unterscheidet, daß die erste Spannung an der der ersten Schweißelektrode 12 abgewandten Fläche des ersten Werkstücks 16 und die zweite Spannung an der der zweiten Schweißelektrode 14 abgewandten Fläche des zweiten Werkstücks 18 abgegriffen wird.

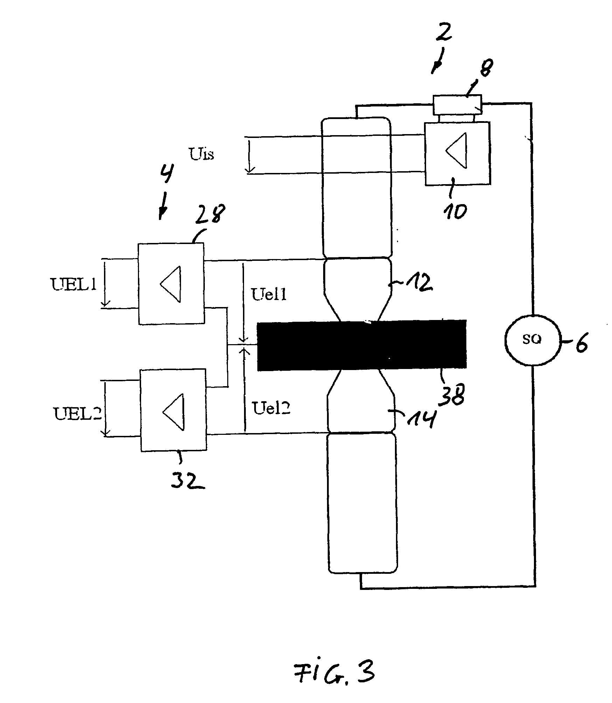

In Fig. 3 ist eine Anordnung zur Kalibrierung der Auswerte- und Steuereinrichtung 34 dargestellt. Hierbei wird an Stelle der Werkstücke 16, 18 ein Kalibrierungswerkstück 38 beispielsweise aus Kupfer verwendet, auf das die Schweißelektroden 12, 14 aufgesetzt werden. Bei aufgesetzten Schweißelektroden 12, 14 fließt daran anschließend ein von der Stromquelle 6 erzeugter Schweißstrom durch das Kalibrierungswerkstück 38, wobei das erste Meßgerät 22 die Spannung zwischen der ersten Schweißelektrode 12 und dem Kalibrierungswerkstück 38 und die das zweite Spannungsmeßgerät 24 die Spannung zwischen der zweiten Schweißelektrode 14 und dem Kalibrierungswerkstück 38 mißt. Anhand der gemessenen Spannungen kann dann die Auswerte- und Steuerungseinrichtung 34 gegebenenfalls kalibriert werden.

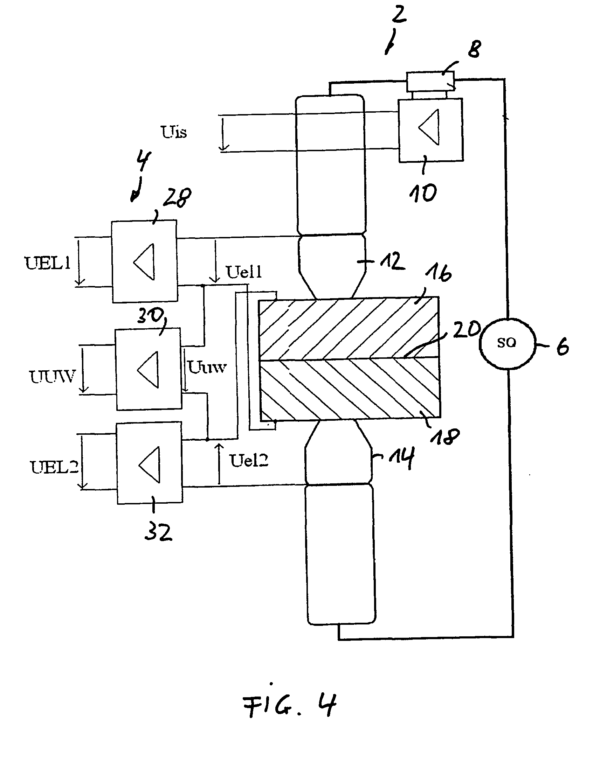

In Fig. 4 ist ein drittes Ausführungsbeispiel einer erfindungsgemäßen Einrichtung dargestellt, das sich von dem Ausführungsbeispiel gemäß Fig. 1 dadurch unterscheidet, daß die erste Spannung zwischen der ersten Schweißelektrode 12 und der der ersten Schweißelektrode 12 abgewandten Fläche des zweiten Werkstücks 18 und die zweite Spannung zwischen der zweiten Schweißelektrode 14 und der der zweiten Schweißelektrode 14 abgewandten Fläche des ersten Werkstücks 16 gemessen wird.

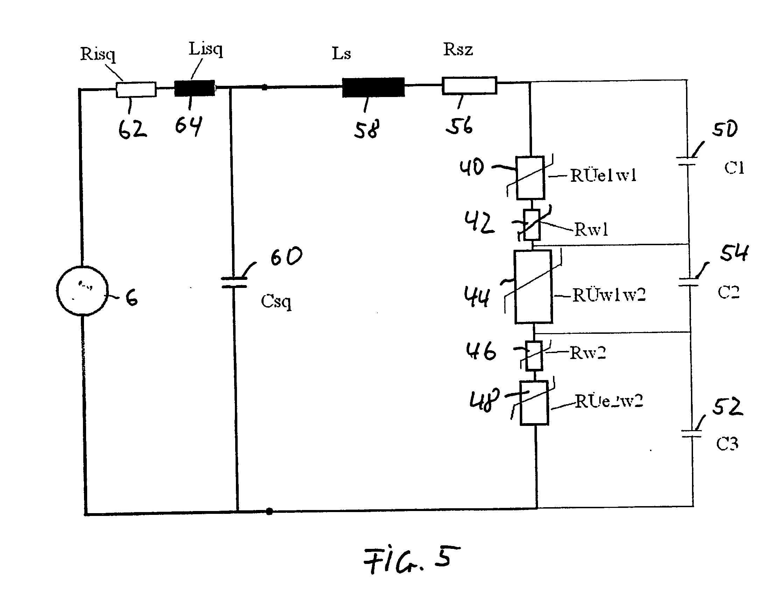

In Fig. 5 ist ein vereinfachtes Ersatzschaltbild der aus der Einrichtung 2 und den Werkstücken 16, 18 bestehenden Anordnung dargestellt. Wie in Fig. 5 dargestellt, weist die so gebildete Anordnung eine Reihenschaltung von fünf Ohmschen Widerständen 40, 42, 44, 46, 48 auf, die während des Schweißvorganges aufgrund der Temperaturänderung und/oder Änderung der Anpreßkraft linear oder nichtlinear, in der Regel jedoch nichtlinear, veränderlich sind.

Im einzelnen repräsentiert der nichtlineare Ohmsche Widerstand 40 den Übergangswiderstand zwischen der ersten Schweißelektrode 12 und dem ersten Werkstück 16, während der nichtlineare Ohmsche Widerstand 48 in hierzu entsprechender Weise den Übergangswiderstand zwischen der zweiten Schweißelektrode 14 und dem zweiten Werkstück 18 repräsentiert. Der nichtlineare Ohmsche Widerstand 42 repräsentiert den Widerstand des ersten Werkstücks 16, während der nichtlineare Ohmsche Widerstand 46 in hierzu entsprechender Weise den Ohmschen Widerstand des zweiten Werkstückes 18 repräsentiert. Der nichtlineare Ohmsche Widerstand 44 repräsentiert den Übergangswiderstand an der Kontaktfläche zwischen den Werkstücken 16, 18.

Durch den Ohmschen Widerstand 40 wird im wesentlichen die zwischen der ersten Schweißelektrode 12 und dem ersten Werkstück 16 dissipierte elektrische Leistung (obige Leistungskomponente gemäß 1.) dissipiert, während durch den Ohmschen Widerstand 48 im wesentlichen die zwischen der zweiten Schweißelektrode 14 und dem zweiten Werkstück 18 dissipierte elektrische Leistung (obige Leistungskomponente gemäß 3.) dissipiert wird. Durch den Ohmschen Widerstand 44 wird diejenige Leistungskomponente der elektrischen Leistung dissipiert, die zur Bildung der Schweißlinse 36 an der Kontaktfläche 20 zwischen den zu verschweißenden Werkstükken 16, 18 führt (obige Leistungskomponente gemäß 2.).

Mit dem Bezugszeichen 50 ist eine parasitäte Kapazität zwischen der ersten Schweißelektrode 12 und dem ersten Werkstück 16 bezeichnet, während mit dem Bezugszeichen 52 eine parasitäre Kapazität zwischen der zweiten Schweißelektrode 14 und dem zweiten Werkstück 18 bezeichnet ist. Mit dem Bezugszeichen 54 ist eine parasitäte Kapazität zwischen den Werkstücken 16, 18 bezeichnet. Wie aus Fig. 5 ersichtlich ist, ist die Kapazität 50 parallel zu der Reihenschaltung aus den Widerständen 40, 42, die Kapazität 54 parallel zu dem Widerstand 44 und die Kapazität 52 parallel zu der Reihenschaltung aus den Widerständen 46, 48 geschaltet.

Das Bezugszeichen 56 bezeichnet den Ohmschen Widerstand einer die Schweißelektroden 12, 14 aufweisenden Schweißzange während die Induktivität des Sekundärkreises des Schweißtransformators mit dem Bezugszeichen 58 bezeichnet ist.

Eine zu der Stromquelle 6 parallel liegende Kapazität der Stromquelle 6 ist mit dem Bezugszeichen 60 versehen. Ein Ohmscher Innenwiderstand der Stromquelle 6, die in Fig. 5 als ideale Stromquelle angenommen ist, ist mit dem Bezugszeichen 62 bezeichnet, und eine Induktivität der idealen Stromquelle 6 ist mit dem Bezugszeichen 64 bezeichnet.

## Patentansprüche

1. Verfahren zur Gewinnung von Informationen zur Beurteilung der Qualität einer Widerstandsschweißverbindung,
wobei während des schweißvorganges als erste Spannung die Spannung zwischen einer ersten Schweißelektrode (12) und einem ersten (16) von zu verschweißenden Werkstücken (16, 18) gemessen wird und
wobei als zweite Spannung die Spannung zwischen der zweiten Schweißelektrode (14) und einem zweiten (18) der zu verschweißenden Werkstücke (16, 18) gemessen wird,
**dadurch gekennzeichnet,**
**daß** wenigstens ein Parameter der gemessenen ersten Spannung, insbesondere die Amplitude, der Effektivwert oder der zeitliche Mittelwert, zu einem entsprechenden Parameter der gemessenen zweiten Spannung in Beziehung gesetzt wird und
**daß** anhand der gemessenen Spannungen beurteilt wird, ob die Widerstandsschweißverbindung vorbestimmten Anforderungen entspricht.

2. Verfahren nach Anspruch 1, **dadurch gekennzeichnet, daß** der Parameter der ersten Spannung mit dem Parameter der zweiten Spannung verglichen wird.

3. Verfahren nach Anspruch 1, **dadurch gekennzeichnet, daß** wenigstens eine der gemessenen Spannungen mit einem vorgegebenen oder vorgebbaren Sollwert verglichen wird.

4. Verfahren nach Anspruch 1, **dadurch gekennzeichnet, daß** die erste Spannung und/oder die zweite Spannung während des Schweißvorganges zu einem oder mehreren vorbestimmten und/oder während des Schweißvorganges gewählten Zeitpunkten oder wenigstens zeitweise kontinuierlich gemessen werden bzw. wird.

5. Verfahren nach Anspruch 1, **dadurch gekennzeichnet, daß** anhand der gemessenen Spannung bzw, der gemessenen Spannungen die Größe einer sich während des Schweißvorganges bildenden Schweißlinse und/oder die Lage der Schweißlinse relativ zu einer Kontaktebene zwischen den zu verschweißenden Werkstücken (16, 18) ermittelt wird.

6. Verfahren nach Anspruch 1, **dadurch gekennzeichnet, daß** wenigstens ein Parameter des Schweißvorganges in Abhängigkeit von der gemessenen Spannung bzw. den gemessenen Spannungen gesteuert oder geregelt wird.

7. Verfahren nach Anspruch 6, **dadurch gekennzeichnet, daß** wenigstens eine der gemessenen Spannungen mit einer vorgegebenen oder vorgebbaren Referenzspannung verglichen wird und daß der Parameter oder die Parameter des Schweißvorganges in Abhängigkeit von dem Vergleichsergebnis gesteuert bzw. geregelt wird bzw. werden.

8. Verfahren nach Anspruch 6, **dadurch gekennzeichnet, daß** die Parameter des Schweißvorganges wenigstens
- die Amplitude des Schweißstromes,
- die Schweißzeit,
- die Kurvenform des Schweißstromes,
- die Pulsform und/oder Pulsfrequenz eines gepulsten Schweißstromes
- die Spannung an der Sekundärwicklung des verwendeten Schweißtransformators
- die Polarität der Spannung an den Schweißelektroden (12, 14) und
- eine Kraft, die wenigstens eine der Schweißelektroden (12, 14) auf wenigstens eines der zu verschweißenden Werkstücke ausübt,
umfassen.

9. Verfahren nach Anspruch 1, **dadurch gekennzeichnet, daß** wenigstens eine der Spannungen zwischen einer der Schweißelektroden (12, 14) und einer dieser Schweißelektrode zugewandten Fläche des von dieser Schweißelektrode (12, 14) berührten Werkstücks (16, 18) gemessen wird.

10. Verfahren nach Anspruch 1, **dadurch gekennzeichnet, daß** wenigstens eine der Spannungen zwischen einer der Schweißelektroden und einer dieser Schweißelektrode abgewandten Fläche des von dieser Schweißelektrode berührten Werkstücks gemessen wird.

11. Verfahren nach Anspruch 1, **dadurch gekennzeichnet, daß** wenigstens eine der Spannungen zwischen einer der Schweißelektroden (12) und einer dieser Schweißelektrode (12) abgewandten Fläche des von der anderen Schweißelektrode (14) berührten Werkstücks (18) gemessen wird.

12. Verfahren nach Anspruch 1, **dadurch gekennzeichnet, daß** aus wenigstens einer der gemessenen Spannungen ein Übergangswiderstand zwischen der zugeordneten Schweißelektrode (12, 14) und dem von ihr berührten Werkstück (16, 18) und/oder ein Übergangswiderstand zwischen den zu verschweißenden Werkstücken (16, 18) ermittelt wird.

13. Verfahren nach Anspruch 1, **dadurch gekennzeichnet, daß** aus wenigstens einer der gemessenen Spannungen eine Leistung ermittelt wird, die durch einen Übergangswiderstand zwischen einer der Schweißelektroden (12, 14) und dem von ihr berührten Werkstück (16, 18) und/oder ein Übergangswiderstand zwischen den zu verschweißenden Werkstücken (16, 18) dissipiert wird.

14. Verfahren nach Anspruch 1, **dadurch gekennzeichnet, daß** anhand wenigstens einer gemessenen Spannung ermittelt wird, ob wenigstens eine der schweißelektroden (12, 14) das ihr zugeordnete Werkstück berührt.

15. Verfahren nach einem der vorhergehenden Ansprüche, **dadurch gekennzeichnet, daß** das Verfahren zur Steuerung eines Widerstandsschweißverfahrens verwendet wird.

16. Verfahren nach einem der vorhergehenden Ansprüche, **dadurch gekennzeichnet, daß** das Verfahren zur Regelung eines widerstandsschweißverfahrens verwendet wird.

17. Vorrichtung zur Gewinnung von Informationen zur Beurteilung der Qualität einer Widerstandaschweißverbindung,
mit Spannungsmeßmitteln (22, 24, 26), die derart ausgebildet sind, daß sie während des Schweißvorganges wenigstens als erste Spannung die Spannung zwischen einer ersten Schweißelektrode (12) und einem ersten (16) von zu verschweißenden Werkstücken (16, 18) und als zweite Spannung die Spannung zwischen der zweiten Schweißelektrode (14) und einem zweiten (18) der zu verschweißenden Werkstücke (16, 18) messen,
**gekennzeichnet durch**
Auswertemittel, die einen Parameter, insbesondere die Amplitude, den Effektivwert oder den zeitlichen Mittelwert, der gemessenen ersten Spannung zu einem entsprechenden Parameter der gemessenen zweiten Spannung in Beziehung setzen,
wobei die Auswertemittel anhand der gemessenen Spannungen beurteilen, ob die Widerstandsschweißverbindung vorbestimmten Anforderungen entspricht.

18. Vorrichtung nach Anspruch 17, **dadurch gekennzeichnet, daß** die Auswertemittel Vergleichsmittel aufweisen, die den Parameter der ersten Spannung mit dem Parameter der zweiten Spannung vergleichen.

19. Vorrichtung nach Anspruch 18, **gekennzeichnet durch** Vergleichsmittel, die wenigstens eine der gemessenen Spannungen mit einem vorgegebenen oder vorgebbaren Sollwert vergleichen.

20. Vorrichtung nach Anspruch 18, **dadurch gekennzeichnet, daß** die Spannungsmeßmittel (22, 24, 26) die erste Spannung und/oder die zweite Spannung während des Schweißvorganges zu einem oder mehreren vorbestimmten und/oder während des schweißvorganges gewählten Zeitpunkten oder wenigstens zeitweise kontinuierlich messen.

21. Vorrichtung nach Anspruch 18, **gekennzeichnet durch** Steuerungs- und/oder Regelungsmittel zur Steuerung und/oder Regelung wenigstens eines Parameters des Schweißvorganges in Abhängigkeit von der gemessenen Spannung bzw. den gemessenen Spannungen.

22. Vorrichtung nach Anspruch 21, **dadurch gekennzeichnet, daß** die Steuerungs- und/oder Regelungsmittel den Parameter oder die Parameter des Schweißvorganges in Abhängigkeit von einem Vergleichsergebnis eines Vergleiches wenigstens einer der gemessenen Spannungen mit einer vorgegebenen oder vorgebbaren Referenzspannung steuern bzw. regeln.

23. Vorrichtung nach Anspruch 22, **dadurch gekennzeichnet, daß** die von den Steuerungs- und/oder Regelungsmitteln gesteuerten bzw. geregelten Parametern des Schweißvorganges wenigstens
- die Amplitude des Schweißstromes,
- die Schweißzeit,
- die Kurvenform des Schweißstromes
- die Pulsform und/oder Pulsfrequenz eines gepulsten Schweißstromes
- die Spannung an der Sekundärwicklung des verwendeten Schweißtransformators
- die Polarität der Spannung an den Schweißelektroden und
- eine Kraft, die wenigstens eine der Schweißelektroden auf wenigstens eines der zu verschweißenden Werkstücken ausübt,
umfassen.

## Claims

1. Method for obtaining information for evaluating the quality of a resistance welding bond,
wherein during the welding process as the first voltage the voltage is measured between a first welding electrode (12) and a first workpiece (16) of the workpieces (16, 18) to be welded and
wherein as the second voltage the voltage is measured between the second welding electrode (14) and a second workpiece (18) of the workpieces (16, 18) to be welded,
**characterised in that**
at least one parameter of the measured first voltage, in particular the amplitude, the effective value or the time average value, is related to a corresponding parameter of the measured second voltage and
**in that** by way of the measured voltages it is determined whether the resistance welding bond corresponds to prespecified requirements.

2. Method according to claim 1, **characterised in that** the parameter of the first voltage is compared with the parameter of the second voltage.

3. Method according to claim 1, **characterised in that** at least one of the measured voltages is compared with a predetermined or predeterminable reference value.

4. Method according to claim 1, **characterised in that** the first voltage and/or the second voltage is or are measured during the welding process at one or more predetermined time points and/or time points selected during the welding process or measured at least partly continuously.

5. Method according to claim 1, **characterised in that** with reference to the measure voltage or the measured voltages the size of a welding nugget formed during the welding process is determined and/or the position of the welding nugget relative to a contact plane between the workpieces (16, 18) to be welded is determined.

6. Method according to claim 1, **characterised in that** at least one parameter of the welding process is controlled or regulated as a function of the measured voltage or the measured voltages.

7. Method according to claim 6, **characterised in that** at least one of the measure voltages is compared with a predetermined or predeterminable reference voltage and **in that** the parameter or the parameters of the welding process is or are controlled or regulated as a function of the comparison result.

8. Method according to claim 6, **characterised in that** the parameters of the welding process comprise at least
- the amplitude of the welding current;
- the welding period;
- a curve form of the welding current;
- the pulse form and/or pulse frequency of a pulsed welding current;
- the voltage at the secondary winding of the used welding transformer;
- the polarity of the voltage at the welding electrodes (12, 14) and
- a force that at least one of the welding electrodes (12, 14) exerts on at least one of the workpieces to be welded.

9. Method according to claim 1, **characterised in that** at least one of the voltages is measured between one of the welding electrodes (12, 14) and a surface facing said welding electrode of the workpiece (16, 18) contacted by said welding electrode (12, 14).

10. Method according to claim 1, **characterised in that** at least one of the voltages is measured between one of the welding electrodes and a surface facing away from said welding electrode of the workpiece contacted by said welding electrode.

11. Method according to claim 1, **characterised in that** at least one of the voltages is measured between one of the welding electrodes (12) and a surface facing away from said welding electrode (12) of the workpiece (18) contacted by the other welding electrode (14).

12. Method according to claim 1, **characterised in that** from at least one of the measured voltages a transition resistance is determined between the assigned welding electrode (12, 14) and the workpiece (16, 18) contacted thereby and/or the transition resistance between the workpieces (16, 18) to be welded.

13. Method according to claim 1, **characterised in that** from at least one of the measured voltages a power is determined, which is dissipated by a transition resistance between one of the welding electrodes (12, 14) and the workpiece (16, 18) contacted thereby and/or a transition resistance between the workpieces (16, 18) to be welded.

14. Method according to claim 1, **characterised in that** by way of at least one measured voltage it is determined whether at least one of the welding electrodes (12, 14) is in contact with the workpiece assigned thereto.

15. Method according to one of the preceding claims, **characterised in that** the method is used for controlling a resistance welding process.

16. Method according to one of the preceding claims, **characterised in that** the method is used for regulating a resistance welding process.

17. Device for obtaining information for assessing the quality of a resistance welding bond, comprising:
voltage measuring means (22, 24, 26), which are designed so that they measure during the welding process at least as the first voltage the voltage between a first welding electrode (12) and a first workpiece (16) of the workpieces (16, 18) to be welded and as a second voltage the voltage between the second welding electrode (14) and a second workpiece (18) of the workpieces (16, 18) to be welded,
**characterised by**
evaluation means, which relate a parameter, in particular the amplitude, the effective value or the time average value of the measured first voltage to a corresponding parameter of the measured second voltage,
wherein the evaluation means assess by means of the measured voltages, whether the resistance welding bond corresponds to prespecified requirements.

18. Device according to claim 17, **characterised in that** the evaluation means comprise comparison means, which compare the parameter of the first voltage with the parameter of the second voltage

19. Device according to claim 18, **characterised by** comparison means which compare at least one of the measured voltages with a predetermined or predeterminable reference value.

20. Device according to claim 18, **characterised in that** the voltage measuring means (22, 24, 26) measure the first voltage and/or the second voltage during the welding process at one or more predetermined time points and/or time points selected during the welding process or measure at least partly continuously.

21. Device according to claim 18, **characterised by** control and/or regulating means for controlling and/or regulating at least one parameter of the welding process as a function of the measured voltage or the measured voltages.

22. Device according to claim 21, **characterised in that** the control and/or regulating means control or regulate the parameter or the parameters of the welding process as a function of a comparison result of a comparison of at least one of the measured voltages with a predetermined or predeterminable reference voltage.

23. Device according to claim 22, **characterised in that** the parameters of the welding process controlled or regulated by the control and/or regulating means comprise at least
- the amplitude of the welding current;
- the welding period;
- a curve form of the welding current;
- the pulse form and/or pulse frequency of a pulsed welding current;
- the voltage at the secondary winding of the used welding transformer;
- the polarity of the voltage at the welding electrodes (12, 14) and
- a force that at least one of the welding electrodes (12, 14) exerts on at least one of the workpieces to be welded.

## Revendications

1. Procédé pour obtenir des informations permettant d'évaluer la qualité d'un assemblage soudé par résistance,
selon lequel, pendant le processus de soudage, la tension entre une première électrode de soudure (12) et une première pièce (16, 18) à assembler par soudage est mesurée en tant que première tension, et
selon lequel la tension entre la deuxième électrode de soudure (14) et une deuxième pièce (18) à assembler par soudage est mesurée en tant que deuxième tension,
**caractérisé**
**en ce qu'**au moins un paramètre de la première tension mesurée, en particulier l'amplitude, la valeur effective ou la valeur moyenne de temps, est mis en rapport avec un paramètre correspondant de la deuxième tension mesurée, et
**en ce qu'**à l'appui des tensions mesurées, il est évalué si l'assemblage soudé par résistance satisfait à des exigences prédéterminées.

2. Procédé selon la revendication 1, **caractérisé en ce que** le paramètre de la première tension est comparé au paramètre de la deuxième tension.

3. Procédé selon la revendication 1, **caractérisé en ce qu'**au moins une des tensions mesurées est comparée à une valeur de consigne prédéfinie ou prédéfinissable.

4. Procédé selon la revendication 1, **caractérisé en ce que** la première tension et/ou la deuxième tension est ou sont mesurée(s) pendant le processus de soudage à un ou plusieurs instants prédéterminée et/ou choisis pendant le processus de soudage ou au moins de temps en temps en continu.

5. Procédé selon la revendication 1, **caractérisé en ce que** la taille d'un noyau de soudure formée pendant le processus de soudage et/ou la position du noyau de soudure par rapport à un plan de contact entre les pièces (16, 18) à assembler par soudage sont déterminées à l'appui de la tension mesurée ou des tensions mesurées.

6. Procédé selon la revendication 1, **caractérisé en ce qu'**au moins un paramètre du processus de soudage est commandé ou réglé en fonction de la tension mesurée ou des tensions mesurées.

7. Procédé selon la revendication 6, **caractérisé en ce qu'**au moins une des tensions mesurées est comparée à une tension de référence prédéfinie ou prédéfinissable, et **en ce que** le paramètre ou les paramètres du processus de soudage est ou sont commandé(s) ou réglé(s) en fonction du résultat de la comparaison.

8. Procédé selon la revendication 6, **caractérisé en ce que** les paramètres du processus de soudage comprennent au moins
- l'amplitude du courant de soudage,
- la durée du soudage,
- la forme de la courbe du courant de soudage,
- la forme et/ou la fréquence des impulsions d'un courant de soudage pulsé,
- la tension au niveau de l'enroulement secondaire du transformateur de soudage utilisé,
- la polarité de la tension au niveau des électrodes de soudure (12, 14), et
- une force exercée par au moins une des électrodes de soudure (12, 14) sur au moins une des pièces à assembler par soudage.

9. Procédé selon la revendication 1, **caractérisé en ce que** l'on mesure au moins une des tensions entre une des électrodes de soudure (12, 14) et une surface, orientée vers cette électrode de soudure, de la pièce (16, 18) en contact avec cette électrode de soudure (12, 14).

10. Procédé selon la revendication 1, **caractérisé en ce que** l'on mesure au moins une des tensions entre une des électrodes de soudure et une surface, opposée à cette électrode de soudure, de la pièce en contact avec cette électrode de soudure.

11. Procédé selon la revendication 1, **caractérisé en ce que** l'on mesure au moins une des tensions entre une des électrodes de soudure (12) et une surface, opposée à cette électrode de soudure (12), de la pièce (18) en contact avec l'autre électrode de soudure (14).

12. Procédé selon la revendication 1, **caractérisé en ce qu'**une résistance de contact entre l'électrode de soudure (12, 14) associée et la pièce (16, 18) en contact avec celle-ci et/ou une résistance de contact entre les pièces (16, 18) à assembler par soudage sont déterminées partir d'au moins une des tensions mesurées.

13. Procédé selon la revendication 1, **caractérisé en ce qu'**à partir au moins une des tensions mesurées est déterminée une puissance qui est dissipée par une résistance de contact entre une des électrodes de soudure (12, 14) et la pièce (16, 18) en contact avec celle-ci, et/ou par une résistance de contact entre les pièces (16, 18) à assembler par soudage.

14. Procédé selon la revendication 1, **caractérisé en ce qu'**à l'appui d'au moins une tension mesurée, il est déterminé si une des électrodes de soudure (12, 14) entre en contact avec la pièce qui lui est associée.

15. Procédé selon l'une quelconque des revendications précédentes, **caractérisé en ce que** le procédé est utilisé pour la commande d'un procédé de soudage par résistance.

16. Procédé selon l'une quelconque des revendications précédentes, **caractérisé en ce que** le procédé est utilisé pour le réglage d'un procédé de soudage par résistance.

17. Dispositif pour obtenir des informations permettant d'évaluer la qualité d'un assemblage soudé par résistance,
comportant des moyens de mesure de la tension (22, 24, 26), qui sont conçus de telle sorte que, pendant le processus de soudage, ils mesurent en tant que première tension, au moins la tension entre une première électrode de soudure (12) et une première pièce (16) des pièces (16, 18) à assembler par soudage et en tant que deuxième tension, au moins la tension entre la deuxième électrode de soudure (14) et une deuxième pièce (18) des pièces (16, 18) à assembler par soudage,
**caractérisé par**
des moyens d'analyse qui mettent en rapport un paramètre de la première tension mesurée, en particulier l'amplitude, la valeur effective ou la valeur moyenne de temps, avec un paramètre correspondant de la deuxième tension mesurée,
les moyens d'analyse évaluant à l'appui des tensions mesurées, si l'assemblage soudé par résistance satisfait à des exigences prédéterminées.

18. Dispositif selon la revendication 17, **caractérisé en ce que** les moyens d'analyse comportent des moyens de comparaison qui comparent le paramètre de la première tension avec le paramètre de la deuxième tension.

19. Dispositif selon la revendication 18, **caractérisé par** des moyens de comparaison, par lesquels au moins une des tensions mesurées est comparée à une valeur de consigne prédéfinie ou prédéfinissable.

20. Dispositif selon la revendication 18, **caractérisé en ce que** les moyens de mesure de la tension (22, 24, 26) mesurent la première tension et/ou la deuxième tension pendant le processus de soudage à un ou plusieurs instants prédéterminée et/ou choisis pendant le processus de soudage ou au moins de temps en temps en continu.

21. Dispositif selon la revendication 18, **caractérisé par** des moyens de commande et/ou de réglage pour la commande et/ou le réglage d'au moins un paramètre du processus de soudage en fonction de la tension mesurée ou des tensions mesurées.

22. Dispositif selon la revendication 21, **caractérisé en ce que** les moyens de commande et/ou de réglage commandent ou règlent le paramètre ou les paramètres du processus de soudage en fonction du résultat d'une comparaison d'au moins une des tensions mesurées avec une tension de référence prédéfinie ou prédéfinissable.

23. Dispositif selon la revendication 22, **caractérisé en ce que** les paramètres du processus de soudage commandés ou réglés par les moyens de commande et/ou de réglage, comprennent au moins
- l'amplitude du courant de soudage,
- la durée du soudage,
- la forme de la courbe du courant de soudage,
- la forme et/ou la fréquence des impulsions d'un courant de soudage pulsé,
- la tension au niveau de l'enroulement secondaire du transformateur de soudage utilisé,
- la polarité de la tension au niveau des électrodes de soudure, et
- une force exercée par au moins une des électrodes de soudure sur au moins une des pièces à assembler par soudage.
